# EUROPEAN PATENT SPECIFICATION

(11) **EP 2 430 744 B1**
(45) Date of publication and mention of the grant of the patent: **10.04.2013**
(21) Application number: 09786856.6
(22) Date of filing: 07.05.2009
(51) Int. Cl.: H02P 6/16, H02P 6/18

(54) **METHOD AND DEVICE FOR CONTROLLING A BRUSHLESS MOTOR**
VERFAHREN UND VORRICHTUNG ZUR STEUERUNG EINES BÜRSTENLOSEN MOTORS
PROCÉDÉ ET DISPOSITIF PERMETTANT DE COMMANDER UN MOTEUR SANS BALAIS

(43) Date of publication of application: 21.03.2012
(73) Proprietor: Aktiebolaget SKF, 41 550 Göteborg (SE)
(72) Inventor: LANDRIEVE, Franck, F-37230 Fondettes (FR)
(74) Representative: Myon, Gérard Jean-Pierre
(86) International application number: PCT/IB2009/053476
(87) International publication number: WO 2010/128365

(56) References cited:
- EP-A2- 1 398 868
- WO-A1-92/20080
- WO-A1-2004/084402
- JP-A- 2002 165 480
- US-A1- 2005 275 361

## Description

### TECHNICAL FIELD OF THE INVENTION

This invention relates to a method for controlling a brushless motor and to a control device for such a motor.

### BACKGROUND OF THE INVENTION

It is known to control a brushless motor provided with three coils with a controller generating control signals for a motor power supply, on the basis of at least one signal provided by a sensor mounted on a printed circuit board and located around a magnetic ring with a number of pairs of poles identical to the number of magnets of the rotor of the brushless motor. This requires to angularly position the printed circuit board in such a way that the signals delivered by the sensors are consistent with the passage of the magnets in front of the coils of the motor. Even if this angular positioning is carefully realized, which is time consuming, it cannot compensate some inaccuracy in the positioning of the magnetic poles on the magnetic washer and in the positioning of the sensors one with respect to the other.

It is also possible to use an absolute sensor and to program, in a controller, a curve giving the supply parameters of the coils on the basis of the angular position of the rotor. This requires a high speed controller and a precise sensor, together with small tolerances in the motor. With this respect, the mechanical and electrical characteristics can vary from one motor to another, which induces also some inaccuracy in the control of a set of motors.

WO-A-2004/084402 considers programming measured commutation points for the coils of a motor on a bearing belonging to a motor. The accuracy of the angular position detection still depends on the tolerances of the motor parts and of the sensor position.

JP-A-2002 165480 discloses a method for controlling a motor where a microcomputer rotates a motor at a constant speed and some data are registered with respect induced voltages and to an angular speed detected by a rotary encoder. This data is not precise, insofar as it cannot be linked to any angular position.

### SUMMARY OF THE INVENTION

The invention aims at further increasing the accuracy of a method for controlling a brushless motor.

With this respect, the invention relates to a method for controlling a brushless motor provided with several coils and several sensors adapted to detect the angular position of a rotary part fast in rotation with a rotor of the brushless motor and to generate a corresponding position signal, wherein the method includes the steps of:
a) making the rotary part and the rotor fast in rotation;
b) mechanically driving the rotor in rotation;
c) registering, for several angular position of the rotary part in one rotation, an output value of the sensor and the electrical tension generated in each coil due to the rotation of the rotor;
d) accessing the memory and selecting electrical tension values in the memory on the basis of a measured value included in the position signal;
e) generating, in a controller, motor control signals for a motor power supply on the basis of the electrical tension values selected in step d), by symply amplifying the electrical tension values.

Thanks to the invention, in a first part of the method of the invention, one uses the brushless motor as a generator and one registers data which are specific to this motor once the rotor and the rotary part have been assembled together. This enables to compensate any inaccuracy of the positioning of the electric and mechanic parts of the brushless motor one with respect to the other. This data is representative of each motor once its rotor has been coupled to the rotary part and it can then be used by the controller to generate precise control signals which can supply the respective coils of the brushless motor with an optimized current distribution.

According to advantageous but not compulsory aspects of the invention, such a method can incorporate one or several of the following features:
- The brushless motor is provided with several sensors and, prior to step c), it includes a step of mixing the output signals of the sensors into one main output signal whereas, in step b), a value corresponding to the main signal is registered as the output value of the sensors.
- The method includes further steps consisting in converting the output signal of the sensor and the tension generated in each coil from analog to digital, and converting the control signal generated in the controller from digital to analog.
- During step c) data is registered in the form of a table in which each output value of the sensor corresponding to an angular position of the rotary part is associated with the tension generated in each coil for the same angular position of the rotary part.
- Steps a) to c) are implemented once, upon manufacturing of the motor, and steps d) and e) are implemented each time one energizes the coils of the motor.

The invention also concerns a control device which is suitable for implementing the method mentioned here-above and, more specifically, a control device for a brushless motor provided with several coils and several sensors adapted to detect the angular position of a rotary part fast in rotation with a rotor of the brushless motor and to generate a corresponding electric signal, this driving device including a controller which controls a motor power supply. This control device further includes a memory, first means to register, in the memory and for several angular positions of the rotary part, data corresponding to the output signal of the sensor and to the electrical tension generated in each coil when the rotor is mechanically driven in rotation, and second means to provide the controller with the data, wherein the controller is adapted to generate motor control signals for the motor power supply, on the basis of the data provided by the second means, by simply amplifying the data corresponding to the tension generated in each coil.

According to further aspects of the invention, such a control device might incorporate one or several of the following features:
- It includes several sensors and means to mix the output signals of the sensors into one main output signal including values which can be stored into the memory.
- It includes analog-to-digital converters adapted to convert an analog output signal of the sensor or of the coils into a digital signal and a digital control signal generated by the controller into an analog signal usable by the motor power supply.
- The rotary part is mechanically coupled to an inner rotating ring of a rolling bearing which holds a shaft of the rotor.

### BRIEF DESCRIPTION OF THE DRAWINGS

The invention will be better understood on the basis of the following description which is given in correspondence with the annexed figures and as an illustrative example, without restricting the object of the invention. In the annexed figures:
- figure 1 is a schematic representation of a brushless motor and an associated control device
- figure 2 is a schematic representation of the tension generated in the coils of the motor of figure 1 when it is used as a generator

### DETAILED DESCRIPTION OF ONE EMBODIMENT

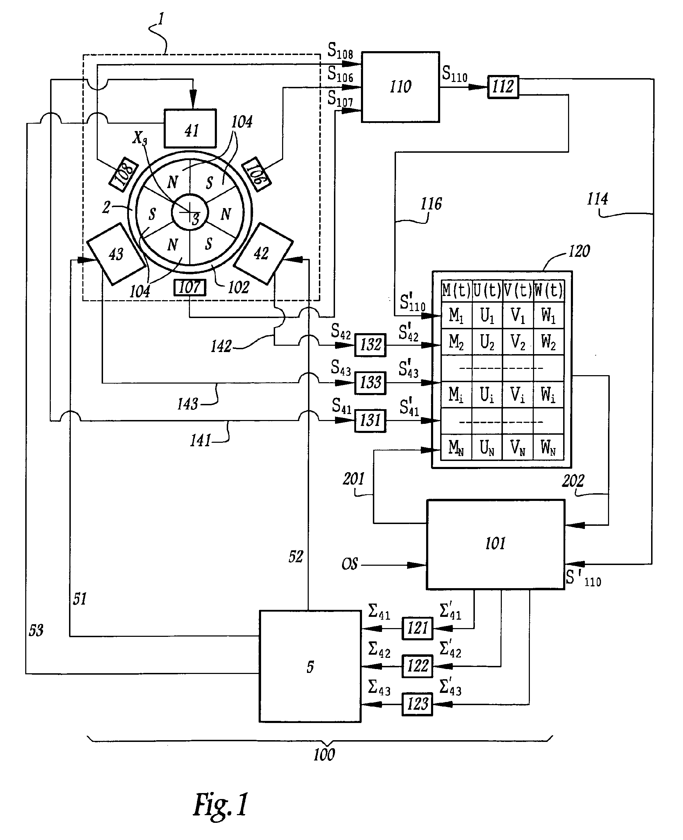

A brushless motor 1 partly represented on figure 1 is provided with a rotor 2 supported by a shaft 3 rotating around a fixed axis X₃. Three coils 41, 42 and 43 and evenly distributed around axis X₃ and positioned to interact with non-represented permanent magnets born by rotor 2.

A motor power supply 5 is connected to each coil 41 to 43 by a respective power supply line 51, 52 and 53. A control device 100 is used to pilot motor power supply 5 on the basis of an order signal OS provided to a digital controller 101.

Control device 100 includes an encoder washer 102 fixedly mounted onto shaft 3, so that it rotates with rotor 2 around axis X₃. Encoder washer 102 includes a number of pairs of poles made by magnets 104. Encoder washer 102 thus forms a magnetic ring whose rotation can be detected by three Hall effect cells 106, 107 and 108 evenly distributed around axis X₃ and encoder washer 102.

When coils 41 to 43 are energized by motor power supply 5, rotor 2 and encoder washer 102 rotate together and Hall effect cells 106 to 108 deliver, to a signal mixer 110, respective output signals S₁₀₆, S₁₀₇, S₁₀₈, which are proportional to the magnetic field created by the rotation of magnets 104. Mixer 110 generates an analog signal S₁₁₀ which is representative of the angular position of encoder washer 102, thus of rotor 2, around axis X₃.

Signal S₁₁₀ is provided to an analog-to-digital converter 112 which generates, on the basis of signal S₁₁₀, a digital signal S'₁₁₀ corresponding to the output value of the set of sensors constituted by the three cells 106, 107 and 108. Converter 112 provides this digital signal S'₁₁₀ to controller 101 via a signal transmission line 114. Controller 101 generates, on the basis of this signal S'₁₁₀ and of data stored in a memory 120, three individual digital signals Σ'₄₁, Σ'₄₂, Σ'₄₃ respectively provided to three digital-to-analog converters 121, 122, 123 which transform signals Σ'₄₁, Σ'₄₂, Σ'₄₃ into analog signals Σ₄₁, Σ₄₂ and Σ₄₃ usable by motor power supply 5.

Upon manufacturing of motor 1, coils 41, 42 and 43 are mounted on a non represented stator, around rotor 2. Encoder washer 102 is fixedly mounted on shaft 3, so that it is made fast in rotation with rotor 2. Hall effect cells 106 to 108, which form sensors of the rotation of encoder washer 2, are mounted on a non-represented support member, such as a printed circuit board or PCB.

In particular, shaft 3 can be supported by a rolling bearing having its inner ring fixedly mounted on shaft 3. Encoder washer 102 can be held by this inner ring, whereas cells 106 to 108 are mounted on a PCB supported by the outer ring of the rolling bearing. Such a rolling bearing constitutes a so-called "instrumented bearing".

After encoder washer 102 has been made fast in rotation with rotor 2, motor 1 is used as a generator. In other words, shaft 3 is mechanically driven in rotation while motor power supply 5 does not deliver current to coils 41 to 43. During this rotation and for several angular positions of rotor 2 around axis X₃, it is possible to collect some information with respect, on the one hand, to the position sensed by cells 106 to 108 and, on the other hand, to the tension generated in each coil 41 to 43 because of the displacement of the magnets of the rotor next to these coils. Actually, such a tension is generated by Foucault currents in the coils. For an instant *t* during the mechanical rotation of shaft 3, U(t) denotes the tension generated in coil 41, whereas V(t) denotes the tension generated in coil 42 and W(t) denotes the tension generated in coil 43.

Each coil 41 to 43 is connected to a respective analog-to-digital converter 131, 132 or 133 by a signal transmission line 141, 142 or 143 which conveys an electric analog signal S₄₁, S₄₂, S₄₃. Each signal S₄₁, S₄₂ and S₄₃ is proportional to the tension generated in the respective coils 41, 42 and 43 as mentioned here-above. Once converted into digital signals by converters 131 to 133, corresponding information is provided to memory 120 in the form of three digital signals S'₄₁, S'₄₂ and S'₄₃. Each signal S'₄₁, S'₄₂ and S'₄₃ is provided to memory 120 for a given instant t. For the same instant t, analog-to-digital converter 112 provides memory 120 with signal S'₁₁₀, through a dedicated signal transmission line 116.

In other words for each instant t during the mechanically driven rotation of rotor 2, memory 120 is provided with a first signal S'₁₁₀(t) giving a measured value M(t) corresponding to the angular position detected by cells 106 to 108, and with three signals S'₄₁, S'₄₂, S'₄₃ corresponding to the value of the tensions respectively generated in coils 41, 42 and 43, namely U(t), V(t) and W(t).

Actually, values are stored in memory 120 for instants and positions corresponding to one full rotation of rotor 2 over 360°. The higher the number of values stored, the better the control of the motor.

As an example, one can store data M, U, V and W for 72 instants t during a rotation, that is for 72 angular positions roughly offset one with respect to the other by 5°.

N denotes the number of instants t for which values M, U, V and W are stored in memory 120. i denotes positive natural number between 1 and N. Mᵢ, Uᵢ, Vᵢ and Wᵢ denote the respective values of data M, U, V and W for i^{th} instant. For each instant tᵢ, values Mᵢ, Uᵢ, Vᵢ and Wᵢ are registered as a set of corresponding data.

By making such an operation for several instants t during the rotation of rotor 2, it is possible to store in memory 120 a table making a correspondence between a given measured value Mᵢ corresponding to a given position of rotor 2 and three measured values of the tensions Uᵢ, Vᵢ and Wᵢ in the respective coils. One notes here that this method does not require to know exactly the angular position of rotor 2 around axis X₃ insofar as what is important is the correspondence between each value Mᵢ and the associated values Uᵢ, Vᵢ and Wᵢ.

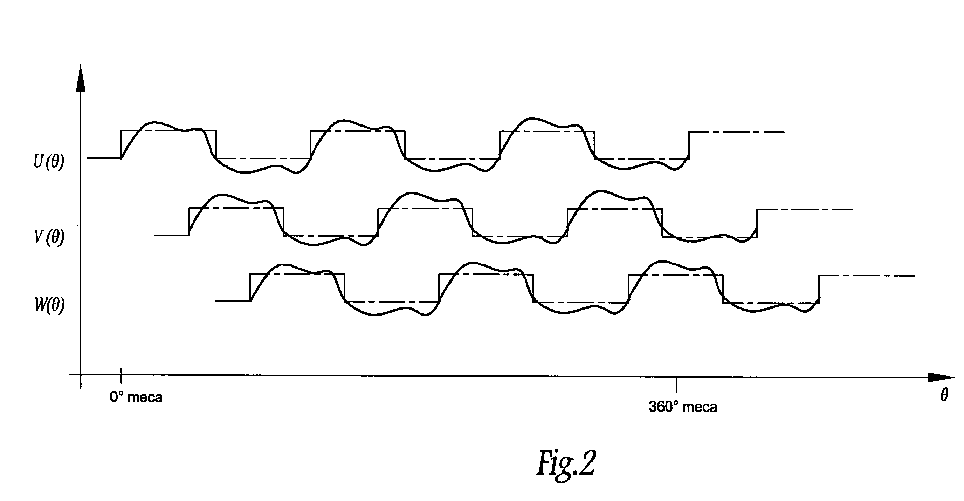

As shown on figure 2 where the dashed lines correspond to theoretical values of tensions U, V and W as a function of an angular position θ of rotor 2, the actual values, which are represented in full lines, can be quite different, even if they globally follow the same pattern as the theoretical values. Actually, the data stored as a table in memory 120 makes it possible to know the curves in full lines, which can be used to efficiently pilot motor power supply 5 when digital controller 101 receives an order signal OS.

Once memory 120 has been fed with data corresponding to values Mᵢ, Uᵢ, Vᵢ and Wᵢ for i between 1 and N, as explained here-above, motor 1 can be used as an electric motor. Motor power supply 5 energizes coils 41, 42 and 43 which induces the rotation of rotor 2 and encoder washer 102. This rotation is sensed by cells 106 to 108 and the corresponding information is provided to controller 101 as signal S'₁₁₀ through line 114. On this basis, controller 101 can access memory 120, as shown by the access line 201, on the basis of the position information value M included in signal S'₁₁₀. From this data, controller 101 can identify in memory 120 a value Mᵢ which is the closest to value M, thus the corresponding tension values Uᵢ, Vᵢ and Wᵢ. The information relating to these tension values is provided to controller 101 through a return line 202. Then, controller 101 uses these values Uᵢ, Vᵢ and Wᵢ as parameters to compute signals Σ'₄₁, Σ'₄₂, Z'₄₃, in a way which is usual in such a controller.

If the value of M included in signal S'₁₁₀ does not match exactly with one value Mᵢ stored in memory 120, it is possible to proceed with two values Mᵢ and Mᵢ₊₁ and to interpolate the values of U, V and W.

In other words, by accessing memory 120 and collecting data with respect to the actual tensions U, V and W in the coils 41, 42 and 43 for a given position M of the rotor 2, it is possible to optimize signals Z'₄₁, Z'₄₂, Σ'₄₃ and thus to optimize the control of motor power supply 5, without actually precisely knowing the angular position θ of rotor 2.

The invention is advantageous because the generation of signals Z'₄₁, Σ'₄₂, Σ'₄₃ in controller 101 can be very fast insofar as tension in the respective coils do not have to be computed since they are directly available, on the basis of the position information M, by access to memory 120. Thus, digital controller 101 can function quickly and a comparatively simple controller can be used in the control system 100. In fact, the controller 101 can be reduced to a simple amplifier, which is more simple to implement and cheaper in comparison to conventional controllers which usually store pre-determined commutation profiles (e.g. triangular or sinewave shaped) for supplying currents to the phases. Similarly, motor power supply 5 can be relatively simple as compared to existing equipments.

Another advantage of the invention lies in the fact that the rotation of the rotor is made smoother and the torque delivered is more constant in time for a given setting value of the command. Indeed, thanks to the invention, the small mechanical imperfections (geometrical dimensions) have no effect on the quality of the output torque, since the commutation profile used for each phase is the best possible one for that phase. Therefore, the vibration and the air-borne noise of the motor are reduced with respect to motors driven by conventional control systems. Also, the motor is more energy efficient because the pattern of the current sent into each coil is optimized.

The invention further allows to loose the geometrical tolerances of the motor, such as air gaps, section of coil wires, thickness of permanent magnets, concentricity of rotor and stator, without compromising the quality of the output torque and the energy efficiency. Therefore, the manufacturing cost of the motor can be significantly reduced.

Furthermore, still due to small mechanical imperfections, two motors of the same design will never be exactly in same in practice and therefore will never perform identically when used with the same control system. However, thanks to the invention, each motor can be calibrated individually so that its associated memory 120 contains the optimized parameters for that motor.

The invention has been described here-above in case of three Hall effect cells. Actually, the number of sensors, Hall effect cells or other type of materials, can be varied, depending on the accuracy of the position sensing line. In particular, the invention can be implemented with one sensor such as a Hall effect cell.

The invention has been described in case it is used with a three-phase brushless motor 1. It can also be used with a two-phase brushless motor.

The invention has been described in case some signals (S₄₁ ... Σ₄₁ ...S₁₁₀ ...) are analog. It is however possible to use only digital signals. Conversely, it is possible to work with digital signals only. In such cases, A/D or D/A converters are not necessary.

## Claims

1. A method for controlling a brushless motor (1) provided with several coils (41, 42, 43) and several sensor (106, 107, 108) adapted to detect the angular position of a rotary part (102) fast in rotation with a rotor (2) of said brushless motor and to generate a corresponding position signal (S'₁₁₀), wherein said method includes the steps of:
a) making said rotary part (102) and said rotor (2) fast in rotation;
b) mechanically driving said rotor (2) in rotation;
c) registering, for several angular position of said rotary part in one rotation, an output value (Mᵢ) of the sensor and of the tension (Uᵢ, Vᵢ, Wᵢ) generated in each coil (41, 42, 43) due to the rotation of the rotor;
d) accessing said memory and selecting electrical tension values (Uᵢ, Vᵢ, Wᵢ) in said memory on the basis of a measured value (M) included in said position signal (S'₁₁₀); and
e) generating in a controller (110) motor control signals Σ'₄₁, Σ'₄₂, Σ'₄₃) for a motor power supply (5) on the basis of the electrical tension values (Uᵢ, Vᵢ, Wᵢ) selected in step d), by symply amplifying the electrical tension values.

2. Method according to claim 1, wherein prior to step c) it includes a step of:
f) mixing the output signals (S₁₀₆, S₁₀₇, S₁₀₈) of said sensors into one main output signal (S₁₁₀, S'₁₁₀) and wherein, in step c), a value (Mᵢ) corresponding to the main signal is registered as the output value of the sensors.

3. Method according to any of the previous claims, wherein it includes further steps of:
g) converting (112, 131, 132, 133) the output signal (S₁₁₀) of said sensor and the tension (S₄₁, S₄₂₁, S₄₃) generated in each coil from analog to digital, and
h) converting (21, 122, 123) the control signal (Z'₄₁, Σ₄₂, Σ'₄₃) generated in said controller from digital to analog.

4. Method according to one of the previous claims, wherein during step c) data is registered in the form of a table in which output value (S'₁₁₀, Mᵢ) of said sensor for a given angular position (t) of the rotary part (102) is associated with the tension (S₄₁, S₄₂, S₄₃, Uᵢ, Vᵢ, Wᵢ) generated in each coil (41, 42, 43) for the same angular position of said rotary part (102).

5. Method according to one of the previous claims, wherein steps a) to c) are implemented once, upon manufacturing of said motor (1), and steps d) and e) are implemented each time one energizes the coils of said motor.

6. A control device (100) for a brushless motor (1) provided with several coils (41, 42, 43) and several sensors (106, 107, 108) adapted to detect the angular position of a rotary part (102) fast in rotation with a rotor (2) of said brushless motor and to generate a corresponding electric signal (S₁₁₀), said driving device including a controller (101) which controls a motor power supply (5), wherein said driving device further includes a memory (120), first means (112, 116, 131-133, 141-143) to register, in said memory and for several angular positions of said rotary part (102), data (Mᵢ, Uᵢ, Vᵢ, Wᵢ) corresponding to the output signal (S₁₁₀) of said sensor and to the electrical tension (S₄₁, S₄₂, S₄₃) generated in each coil (41, 42, 43) when said rotor (2) is mechanically driven in rotation and second means (201, 202) to provide said controller (101) with said data and wherein said controller is adapted to general motor control signals (Σ'₄₁, Σ'₄₂, Σ'₄₃) for said motor power supply (5) on the basis of the data provided by said second means, by simply amplifying the data (Uᵢ, Vᵢ, Wᵢ) corresponding to the tension generated in each coil.

7. Control device according to claim 6, wherein it includes means (110) to mix the output signals (S₁₀₆, S₁₀₇, S₁₀₈) of said sensors into one main output signal (S₁₁₀, S'₁₁₀) including a value (Mᵢ) which can be stored into said memory (120).

8. Control device according to one of claims 6 or 7, wherein it includes analog-to-digital converters (112, 121-123, 131-133, 141-143) adapted to convert an analog output signal (S₁₁₀, S₄₁, S₄₂, S₄₃) of said sensor (106, 107, 108) or of said coil (41-43) into a digital signal (S'₁₁₀, S'₄₁, S'₄₂, S'₄₃) and a digital control signal (Σ'₄₁, Σ'₄₂, Σ'₄₃) generated by said controller (101) into an analog signal (Σ₄₁, Σ₄₂, Σ₄₃) usable by said motor power supply (5).

9. Control device according to one of claims 6 to 8, wherein said rotary part (102) is mechanically coupled to an inner rotating ring of a rolling bearing which holds a shaft (3) of said rotor.

## Patentansprüche

1. Verfahren zur Steuerung eines bürstenlosen Motors (1), der mit mehreren Wicklungen (41, 42, 43) und mehreren Sensoren (106, 107, 108) versehen ist, die angepasst sind, die Winkelposition eines sich fest in Drehung mit einem Rotor (2) des bürstenlosen Motors befindenden Drehteils (102) zu detektieren und ein entsprechendes Positionssignal (S'₁₀₁) zu erzeugen, wobei das Verfahren die Schritte einschließt:
a) das Drehteil (102) und den Rotor (2) fest zur Drehung miteinander zu verbinden;
b) mechanisch den Motor (2) zur Drehung anzutreiben;
c) für unterschiedliche Winkelpositionen des Drehteils bei einer Drehung einen Ausgangswert (Mᵢ) des Sensors und der Spannung (Uᵢ, Vᵢ, Wᵢ), die in jeder Wicklung (41, 42, 43) aufgrund der Drehung des Rotors erzeugt wird, zu registrieren;
d) auf den Speicher zuzugreifen und elektrische Spannungswerte (Uᵢ, Vᵢ, Wᵢ) in diesem Speicher auf der Grundlage eines gemessenen Wertes (M), der in dem Positionssignal (S'₁₁₀) eingeschlossen ist, auszuwählen; und
e) in einem Controller (110) Motorsteuersignale (Σ'₄₁, Σ₄₂, Σ'₄₃) für eine Motorspannungsversorgung (5) auf der Basis der elektrischen Spannungswerte (Uᵢ, Vᵢ, Wᵢ), die im Schritt d) ausgewählt wurden, zu erzeugen, indem nur die elektrischen Spannungswerte verstärkt werden.

2. Verfahren nach Anspruch 1, bei dem vor dem Schritt c) ein Schritt eingeschlossen wird, bei dem:
f) die Ausgangsignale (S₁₀₆, S₁₀₇, S₁₀₈) der Sensoren in ein Hauptausgangssignal (S₁₁₀, S'₁₁₀) eingemischt werden und bei dem im Schritt c) ein Wert (Mᵢ) entsprechend dem Hauptsignal als Ausgangswert der Sensoren registriert wird.

3. Verfahren nach einem der vorhergehenden Ansprüche, bei dem weitere Schritte eingeschlossen werden:
g) Umwandeln (112, 131, 132, 133) des Ausgangssignals (S₁₁₀) des Sensors und der in jeder Wicklung erzeugten Spannung (S₄₁, S₄₂₁, S₄₃) von analog zu digital, und
h) Umwandeln [21, 122, 123] des Steuersignals (Σ'₄₁, Σ'₄₂, Σ'), das in dem Controller erzeugt wird, von digital zu analog.

4. Verfahren nach einem der vorhergehenden Ansprüche, wobei während des Schritts c) Daten in Form einer Tabelle registriert werden, in der ein Ausgangswert (S'₁₁₀, M₁) des Sensors für eine gegebene Winkelposition (t) des Drehteils (102) der in jeder Wicklung (41, 42, 43) erzeugten Spannung (S₄₁, S₄₂, S₄₃, Uᵢ, Vᵢ, Wᵢ) für die gleiche Winkelposition des Drehteils (102) zugeordnet wird.

5. Verfahren nach einem der vorhergehenden Ansprüche, bei dem die Schritte a) bis c) einmal bei der Herstellung des Motors (1) implementiert werden und die Schritte d) und e) jedes Mal implementiert werden, wenn die Wicklungen des Motors erregt werden.

6. Steuervorrichtung (100) für einen bürstenlosen Motor (1), der mit mehreren Wicklungen [41, 42, 43) und mehreren Sensoren (106, 107, 108) versehen ist, die geeignet sind, die Winkelposition eines sich fest in Rotation mit einem Rotor (2) des bürstenlosen Motors befindenden Drehteils (102) zu detektieren und ein entsprechendes elektrisches Signal (S₁₁₀) zu erzeugen, wobei die Antriebsvorrichtung einen Controller (101) einschließt, der eine Motorspannungsversorgung (5) steuert, wobei die Antriebsvorrichtung weiterhin einen Speicher (120), erste Mittel (112, 116, 131-133, 141-143), um in dem Speicher und für mehrere Winkelpositionen des Drehteils (102) Daten (Mᵢ, Uᵢ, Vᵢ, Wᵢ) entsprechend dem Ausgangssignal (S₁₁₀) des Sensors und der elektrischen Spannung (S₄₁, S₄₂, S₄₃), die von jeder Wicklung (41, 42, 43) erzeugt wird, wenn der Rotor (2) mechanisch zur Drehung angetrieben wird, zu registrieren und zweite Mittel (201, 202) umfasst, um den Controller (101) mit den Daten zu versehen und wobei der Controller geeignet ist, Motorsteuersignale (Σ'₄₁, Σ'₄₂, Σ'₄₃) für die Motorspannungsversorgung (5) auf der Basis der von den zweiten Mitteln vorgesehenen Daten zu erzeugen, indem nur die Daten (Uᵢ, Vᵢ, Wᵢ) entsprechend der in jeder Wicklung erzeugten Spannung verstärkt werden.

7. Steuervorrichtung nach Anspruch 6, die Mittel (110) zum Mischen des Ausgangssignals (S₁₀₆, S₁₀₇, S₁₀₈) der Sensoren in ein Hauptausgangssignal (S₁₁₀, S'₁₁₀) einschließlich eines Wertes (Mᵢ), der in dem Speicher (120) gespeichert werden kann, einschließt.

8. Steuervorrichtung nach einem der Ansprüche 6 oder 7, die Analog-Digital-Wandler (112, 121 - 123, 131 - 133, 141 - 143) einschließt, die geeignet sind, ein analoges Ausgangssignal (S₁₁₀, S₄₁, S₄₂, S₄₃) des Sensors (106, 107, 108) oder der Wicklung (41-43) in ein digitales Signal (S'₁₁₀, S'₄₁, S'₄₂, S'₄₃) und ein digitales Steuersignal (Σ'₄₁, Σ'₄₂, Σ'₄₃), das von dem Controller (101) erzeugt wird, in ein analoges Signal (Σ₄₁, Σ₄₂, Σ₄₃), das von der Motorspannungsversorgung (5) verwendet werden kann, umzuwandeln.

9. Steuervorrichtung nach einem der Ansprüche 6 bis 8, bei der das Drehteil (102) mechanisch mit einem inneren Drehring eines Wälzlagers, das die Welle (3) des Rotors hält, gekoppelt ist.

## Revendications

1. Procédé de commande un moteur sans balai (1) pourvu de plusieurs bobines (41, 42, 43) et de plusieurs capteurs (106, 107, 108) aptes à détecter la position angulaire d'une pièce rotative (102) solidaire en rotation avec un rotor (2) dudit moteur sans balai et à générer un signal de position correspondant (S'₁₁₀), dans lequel ledit procédé comprend les étapes de :
a) solidarisation en rotation de ladite pièce rotative (102) et dudit rotor (2) ;
b) entraînement mécanique dudit rotor (2) en rotation ;
c) enregistrement, à plusieurs positions angulaires de ladite pièce rotative dans une rotation, d'une valeur de sortie (Mᵢ) du capteur et d'une tension (Uᵢ, Vᵢ, Wᵢ) générée dans chaque bobine (41, 42, 43) sous l'effet de la rotation du rotor ;
d) accès à ladite mémoire et la sélection de valeurs de tension électrique (Uᵢ, Vᵢ, Wᵢ) dans ladite mémoire en fonction d'une valeur mesurée (M) incluse dans ledit signal de position (S'₁₁₀) ; et
e) génération, dans un contrôleur (110), de signaux de commande de moteur (Σ'₄₁, Σ'₄₂, Σ'₄₃) pour une alimentation électrique de moteur (5) en fonction des valeurs de tension électrique (Uᵢ, Vᵢ, Wᵢ) sélectionnées à l'étape d), en amplifiant simplement les valeurs de tension électrique.

2. Procédé selon la revendication 1, dans lequel, avant l'étape c), il comprend une étape de :
f) mélange des signaux de sortie (S₁₀₆, S₁₀₇, S₁₀₈) desdits capteurs dans un signal de sortie principal (S₁₁₀, S'₁₁₀) et dans lequel, à l'étape c), une valeur (Mᵢ) correspondant au signal principal est enregistrée en tant que valeur de sortie des capteurs.

3. Procédé selon l'une des revendications précédentes, dans lequel il comprend en outre les étapes de :
g) conversion (112, 131, 132, 133) du signal de sortie (S₁₁₀) dudit capteur et la tension (S₄₁, S₄₂, S₄₃) générée dans chaque bobine d'analogique en numérique, et
h) conversion (21, 122, 123) du signal de commande (Σ'₄₁, Σ'₄₂, Σ'₄₃) généré dans ledit organe de commande de numérique en analogique.

4. Procédé selon l'une des revendications précédentes, dans lequel, au cours de l'étape c), des données sont enregistrées sous forme de tableau dans lequel une valeur de sortie (S'₁₁₀, Mᵢ) dudit capteur à une position angulaire donnée (t) de la pièce rotative (102) est associée à la tension (S₄₁, S₄₂, S₄₃, Uᵢ, Vᵢ, Wᵢ) générée dans chaque bobine (41, 42, 43) à la même position angulaire de ladite pièce rotative (102).

5. Procédé selon l'une des revendications précédentes, dans lequel les étapes a) à c) sont mises en oeuvre une fois, lors de la fabrication dudit moteur (1), et les étapes d) et e) sont mises en oeuvre chaque fois que les bobines dudit moteur sont mises sous tension.

6. Dispositif de commande (100) pour un moteur sans balai (1) pourvu de plusieurs bobines (41, 42, 43) et de plusieurs capteurs (106, 107, 108) aptes à détecter la position angulaire d'une pièce rotative (102) solidaire en rotation avec un rotor (2) dudit moteur sans balai et à générer un signal électrique correspondant (S₁₁₀), ledit dispositif de commande comprenant un contrôleur (101) qui commande une alimentation électrique de moteur (5), dans lequel ledit dispositif de commande comprend en outre une mémoire (120), des premiers moyens (112, 116, 131-133, 141-143) pour enregistrer, dans ladite mémoire, à plusieurs positions angulaires de ladite pièce rotative (102), des données (Mᵢ, Uᵢ, Vᵢ, Wᵢ) correspondant au signal de sortie (S₁₁₀) dudit capteur et à la tension électrique (S₄₁, S₄₂, S₄₃) générée dans chaque bobine (41, 42, 43) lorsque ledit rotor (2) est entraîné mécaniquement en rotation et des deuxièmes moyens (201, 202) pour fournir audit contrôleur (101) lesdites données et dans lequel ledit contrôleur est apte à générer des signaux de commande de moteur (Σ'₄₁, Σ'₄₂, Σ'₄₃) pour ladite alimentation électrique de moteur (5) en fonction des données fournies par ledit deuxième moyen, en amplifiant simplement les données (Uᵢ, Vᵢ, Wᵢ) correspondant à la tension générée dans chaque bobine.

7. Dispositif de commande selon la revendication 6, comprenant des moyens (110) pour mélanger les signaux de sortie (S₁₀₆, S₁₀₇, S₁₀₈) desdits capteurs dans un signal de sortie principal (S₁₁₀, S'₁₁₀) comprenant une valeur (Mᵢ) qui peut être stockée dans ladite mémoire (120).

8. Dispositif de commande selon l'une des revendications 6 et 7, dans lequel il comprend des convertisseurs analogique-numérique (112, 121-123, 131-133, 141-143) aptes à convertir un signal de sortie analogique (S₁₁₀, S₄₁, S₄₂, S₄₃) dudit capteur (106, 107, 108) ou de ladite bobine (41-43) en un signal numérique (S'₁₁₀, S'₄₁, S'₄₂, S'₄₃) et un signal de commande numérique (Σ'₄₁, Σ'₄₂, Σ'₄₃) généré par ledit contrôleur (101) en un signal analogique (Σ₄₁, Σ₄₂, Σ₄₃) pouvant être utilisé par ladite alimentation électrique de moteur (5).

9. Dispositif de commande selon l'une des revendications 6 à 8, dans lequel ladite pièce rotative (102) est couplée mécaniquement à un anneau rotatif intérieur d'un roulement qui maintient un arbre (3) dudit rotor.
